# EUROPEAN PATENT SPECIFICATION

(11) **EP 3 605 012 B1**
(45) Date of publication and mention of the grant of the patent: **24.02.2021**
(21) Application number: 18727337.0
(22) Date of filing: 20.03.2018
(51) Int. Cl.: G01B 11/25, G01C 11/30, G05D 1/08, B63C 11/48, B63G 8/00, G01S 7/481

(54) **LASER SCANNING METHOD, ASSEMBLY AND UNDERWATER VEHICLE COMPRISING CORRESPONDING ASSEMBLY**
LASERABTASTANORDNUNG UND ENTSPRECHENDES VERFAHREN, SOWIE UNTERWASSERFAHRZEUG UMFASSEND DIE LASERABTASTANORDNUNG
ENSEMBLE ET PROCÉDÉ DE BALAYAGE LASER, ET VÉHICULE SOUS-MARIN PORTANT UN TEL ENSEMBLE DE BALAYAGE

(30) Priority: 20.03.2017 ES 201730372
(43) Date of publication of application: 05.02.2020
(73) Proprietor: Universitat de Girona, 17004 Girona (ES)
(72) Inventor: PALOMER VILA, Albert, 17820 Banyoles (ES); RIBAS ROMAGÒS, David, 17003 Girona (ES); RIDAO RODRÍGUEZ, Pere, 17007 Girona (ES); FOREST COLLADO, Josep, 17220 Sant Feliu de Guíxols (ES)
(74) Representative: Curell Suñol S.L.P.
(86) International application number: PCT/ES2018/070211
(87) International publication number: WO 2018/172585

(56) References cited:
- US-A1- 2007 285 672
- US-A1- 2008 218 821
- US-A1- 2012 062 963
- US-A1- 2017 069 098

## Description

### Field of the invention

The invention relates to a laser scanning assembly for obtaining a geometric characterization of the shape of a surface based on the principle of triangulation comprising: a laser light emitter for emitting a laser light beam, first diffraction means for transforming said laser light beam into a planar fan configuration arranged downstream of said laser light emitter, first light redirecting means arranged downstream of said laser light emitter for receiving and redirecting said laser light beam and projecting it onto said surface that must be characterized, a light receiver arranged with respect to said surface and with respect to said first redirecting means such that said light receiver captures a scanning area corresponding to an area of said surface that must be characterized including said fan projected onto said surface, and control means functionally associated with said light emitter and said light receiver for synchronizing the joint operation of said light emitter and said light receiver, and said first redirecting means and said light receiver being separated by a known predetermined distance defining a constant baseline between both, and said fan forming, once it is redirected, a first angle with respect to said baseline, and once it is reflected by said surface, a second angle with respect to said baseline.

The invention also relates to a vehicle incorporating said laser scanning assembly for characterizing a surface.

Finally, the invention also relates to a laser scanning method for obtaining a characterization of the shape of a surface comprising the steps of emitting a laser light beam through a laser light emitter, transforming said laser light beam into a planar fan configuration through first diffraction means arranged downstream of said laser light emitter, receiving said laser beam and redirecting it to project it onto said surface that must be characterized through first light redirecting means arranged downstream of said laser light emitter, capturing a scanning area of said surface that must be characterized through a light receiver arranged with respect to said light emitter, said area containing said fan projected onto said surface, and synchronizing the emission of said fan light emitter and the capture by said light receiver through control means functionally associated with said light emitter and said light receiver, said first redirecting means and said light receiver being separated by a known predetermined distance defining a baseline between both, and said fan forming, once it is redirected, a first angle with respect to said baseline, and once it is reflected by said surface, a second angle with respect to said baseline.

### State of the art

Laser scanning assemblies are known in the state of the art. These assemblies make it easier to obtain data for generating one or more three-dimensional point clouds that geometrically describe the surface that must be characterized.

Document US 2012/0062963 A1 discloses a laser scanning assembly including primarily an emitter, a receiver, and a central control. The emitter is a laser light emitter including means for configuring the laser light in a fan configuration. The fan is projected onto the surface that must be characterized. The receiver, which is usually a camera, receives this surface-reflected light that must be characterized. Finally, the control is associated with the emitter and the receiver and is in charge of controlling the emission and reception of the laser light. Furthermore, the control also moves the emitter and receiver together so as to obtain the images which later allow generating the point clouds that characterize the surface.

The same document US 2012/0062963 A1 discloses a second scanning assembly comprising two light receiver subassemblies and a laser light emitter subassembly arranged between the light receiver subassemblies. The light emitter again has means for converting the laser spot light into a fan configuration. In this case, the emitter subassembly can be moved with respect to the light receiver subassemblies.

Document US 2007/285672 A1 discloses an operation of projecting slit light onto an object to be measured and receiving light reflected thereon, and an operation of acquiring a two-dimensional image concerning the object to be measured are repeated a certain number of times by changing a focal length. An imaging contrast is calculated with respect to each of areas on the two-dimensional images acquired at the different focal lengths. A high contrast area where the imaging contrast exceeds a predetermined threshold value is extracted with respect to each of the two-dimensional images acquired at the different focal lengths. Distance information concerning the respective areas is acquired by performing triangulation with respect to each of the high contrast areas. Position adjustment of measurement dimensions is performed in such a manner that the areas are included in the measurement dimensions having the predetermined measurement depth, based on the distance information.

The geometric characterization of surfaces by laser can be incredibly useful in many areas of the art, such as in guiding autonomous vehicles, mapping, the manipulation of devices in dangerous environments, or in other areas. Nevertheless, the problem with known laser scanning systems based on the principle of triangulation resides in how slow they work when obtaining the characterization of the analyzed surface. This causes significant limitations.

### Summary of the invention

It is an object of the invention to provide a laser scanning assembly for obtaining a characterization of the shape of a surface that must be characterized based on the principal of triangulation of the type indicated above, which allows characterizing the surface at a higher speed and with greater definition than the devices known in the state of the art do.

This is achieved by means of a laser scanning method for obtaining a geometric characterization of the shape of a surface in an underwater environment, based on the principle of triangulation, according to claim 1, as well as by means of a laser scanner assembly configured to put the method into practice according to claim 4.

The assembly according to the invention has a number of advantages with respect to the assemblies known in the state of the art. First, as a result of the light redirecting means being assembled so as to be rotational about a fixed shaft with respect to the emitter and the receiver, the need to move both the emitter and the receiver during scanning is eliminated. The mass that must be moved to enable carrying out the scanning is thereby reduced, and the speed of projecting laser light at different points of the surface to be characterized is accordingly increased, since system inertias are minimal. Preferred redirecting means are a galvanometric mirror, for example. The galvanometric mirror can be formed by any reflective surface capable of withstanding the effect of the incident laser without degrading.

On the other hand, the fact that the receiver incorporates first processing means allows considerably reducing the data that is transmitted from said light receiver to said central control and used for finally obtaining the point cloud.

The combination of both features allows greatly increasing in speed since the laser light can be moved at a high speed to scan the surface to be characterized. On the other hand, the reception means only process the indispensable points of each image which they receive from the scanned surface to characterize its geometry.

The invention further includes a number of preferred features that are object of the dependent claims and the utility of which will be highlighted hereinafter in the detailed description of an embodiment of the invention.

For the purpose of simplifying the manufacture of the diffraction means, and making it easier to assemble and align the device to achieve precision scanning, said first diffraction means are arranged between said laser light emitter and said first light redirecting means, such that said laser light beam is first transformed into a planar fan configuration, and it is then redirected by said redirecting means to project said fan onto said surface that must be characterized. In this case, a cylindrical lens or a standard Powell lens adapted to the characteristics of the laser without the need for high assembly machining and assembly precisions can be used.

For the purpose of even further increasing the surface characterization speed, said light receiver comprises a region of interest corresponding to a part of said scanning area, said region of interest being mobile in said scanning area controlled by said control means, depending on the angular position of said first redirecting means, such that said region of interest is displaced in said scanning area to contain the instantaneous position of said fan in said scanning area. This region of interest considerably reduces the scanning area that must be processed through the first processing means of the receiver, which again favors the increase in speed of the assembly.

In a preferred embodiment of the assembly, said scanning area is a parallelogram having right angles with a predetermined base and height, and said region of interest is a parallelogram having right angles. In the most general form of the invention, the light capturing sensor of a camera, and which is projected onto all or part of the surface to be characterized, this projection does not have to be rectangular.

In a particularly preferred manner, said region of interest occupies all of said base or said height of said scanning area, i.e., the region of interest occupies the entire height or the entire base of said parallelogram. In contrast, the region of interest only occupies a part of the other magnitude, i.e., if it occupies the entire height, then it will only occupy part of the base of the scanning area. Control of the region of interest with respect to the area of incidence is thereby simplified, since it must only be moved in one direction.

The invention considers the problem of protecting the scanning assembly from external elements that may damage it. As a result, in a preferred embodiment, the light emitter, said redirecting means, and said light receiver are encapsulated in at least one housing, and said at least one housing comprises an emitting window and a receiving window, said redirecting means being opposite said emitting window to project said planar fan onto said surface, whereas said light receiver is opposite said receiving window to capture said scanning area.

Another relevant problem consists of optimizing the scanning assembly in order to work in media other than air, and particularly submerged in water. To that end, said housing is watertight and said laser is green or blue. The green or blue laser is attenuated to a lesser extent under water than other types of laser and therefore is projected a greater distance. In clear or slightly cloudy water environments, it is particularly preferred for the laser to be blue since it experiences less attenuation than a green laser does, despite experiencing more backscattering, i.e., the reflection of the light towards the assembly itself. Alternatively, in the event of cloudier water, it is preferred for the laser to be green, since despite experiencing greater attenuation than a blue laser does, a green laser experiences less backscattering than a blue laser does. In conditions of a single projection medium, i.e., projection into the air without a change of medium, the planar fan is projected onto the surface as a straight line. This does not occur in cases where there is a change of medium, for example, air-window-water.

On the other hand, the invention also relates to a vehicle incorporating a laser scanning assembly according to the invention. Vehicles of this type equipped in this manner have great operating autonomy, since they are capable of determining what their surrounding environment is like.

In a particularly preferred manner, the device is an underwater vehicle.

The invention considers the problem of reducing human risks in underwater operations. As a result, in a particularly preferred manner the underwater vehicle is a remotely operated or autonomous vehicle.

Finally, the invention also relates to a method that allows improving the speed and definition of the scanning of the surface to be characterized.

This is achieved by means of a laser scanning method for obtaining a geometric characterization of the shape of a surface in an underwater environment, based on the principle of triangulation, according to claim 1.

In a particularly preferred manner, and to simplify the assembly and machining of the lenses of the system, said first diffraction means are arranged between said laser light emitter and said first light redirecting means such that said laser light beam is first transformed into a planar fan configuration, and it is then redirected by said redirecting means to project said fan onto said surface that must be characterized.

On the other hand, to even further increase the scanning speed and the definition, the method comprises the step of applying a region of interest on a part of said scanning area, said region of interest being mobile in said scanning area controlled said control means, depending on the angular position of said first redirecting means, such that said region of interest is displaced in said scanning area to contain the instantaneous position of said fan in said scanning area.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic top plan view of a first embodiment of the scanning assembly according to the invention, in a first scanning position.
Figure 2 shows a schematic top plan view of the scanning assembly of Figure 1, in a second scanning position.
Figure 3 shows a schematic perspective view of a second embodiment of the scanning assembly according to the invention, in a first scanning position.
Figure 4 shows a front view of a scanning area of the light receiver with an area of interest in said first scanning position.
Figure 5 shows a schematic perspective view of the scanning assembly of Figure 3, in a second scanning position.
Figure 6 shows a front view of the scanning area of the light receiver, with the area of interest displaced in the second scanning position.
Figure 7 shows a diagram of the deformation of the planar fan upon changing medium due to the planar fan going through a planar emitting window, depending on the angle of incidence on said window.
Figure 8 shows a schematic front view of a vehicle according to the invention incorporating a laser scanning assembly according to the invention.
Figure 9 shows a schematic top plan view sectioned along a plane of the vehicle of Figure 8.
Figure 10 shows a schematic top plan view of a third embodiment of the scanning assembly according to the invention, in a first scanning position.

### Detailed description of embodiments of the invention

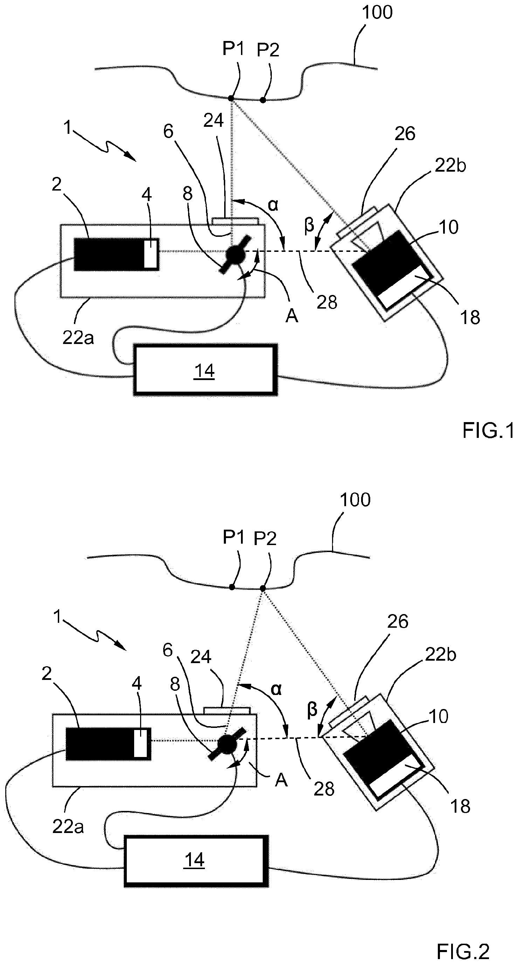

Figures 1 and 2 very schematically show a first embodiment of the laser scanning assembly 1 according to the invention for obtaining a characterization of the shape of a surface 100.

As can be seen in these drawings, the assembly 1 comprises a laser light emitter 2, a light receiver 10, and control means 14 functionally associated with the light emitter 2 and the light receiver 10 and the redirecting means 8 and in charge of synchronizing the operation thereof.

The light emitter 2 is a laser spot light source, i.e., a beam which is projected onto a surface in the form of a point. In the broadest concept of the invention, the laser can be any type of laser, such as a semiconductor-based or solid state laser, and a laser of any wavelength, for example. At the emission end, the light emitter 2 has diffraction means 4 transforming the laser spot light beam into a planar fan configuration 6. Preferably, the diffraction means 4 are, for example, a cylindrical lens or a Powell lens. In the invention, the light emitter 2 and the diffraction means 4 do not necessarily have to form one unit. Alternatively, the diffraction means 4 can be aligned with but somewhat separated from the light emitter 2.

In another alternative embodiment, the light emitter 2 can be separated from the diffraction means 4. In this case, both elements are connected to one another through light guiding means 30, such as an optical fiber, for example. This allows achieving more compact constructive configurations.

In the assembly 1 of the invention, first light redirecting means 8 are provided downstream of the light emitter 2. Accordingly, in this embodiment the diffraction means 4 are located between the light emitter 2 and the light redirecting means 8. This greatly simplifies the assembly, and the lens of the diffraction means 4 is easier to manufacture. In a preferred embodiment, the light redirecting means 8 are a galvanometric mirror manufactured, for example, from monocrystalline silicon with concentrations greater than 95%. In operation, the galvanometric mirror is oriented to project the laser beam configured like a fan 6 coming from the diffraction means 4 onto the surface 100 to be characterized.

As can be seen in the drawings of this embodiment, in a particularly preferred manner the light emitter 2 and the incident beam redirecting means 8 are encapsulated in a first housing 22a. This housing 22a has an emitting window 24. The galvanometric mirror is opposite this emitting window 24 to receive the laser light fan 6 from the light emitter 2, redirect it, and project it onto the surface 100 that must be characterized. In conditions of a single projection medium, i.e., projection into the air without a change of medium, the planar fan 6 is projected onto the surface as a straight line. This does not occur in cases where there is a change of medium, for example, air-emitting window 24-water.

On the other hand, the assembly 1 also has a light receiver 10 arranged such that it is oriented towards the surface 100 that must be characterized and oriented with respect to the first redirecting means 8 such that it can capture a scanning area 12 of the surface 100 onto which the fan 6 is projected. The light receiver 10 can be a camera capable of identifying the pixels illuminated by the reflection of the laser light coming from the surface that must be characterized.

In a particularly preferred manner, the light receiver 10 is also assembled within a second protective housing 22b. The housing 22b of the light receiver 10 comprises a receiving window 26. In a particularly preferred manner, the receiving window 26 is large enough so that when the light receiver 10 is opposite this receiving window 26, it can capture the mentioned scanning area 12, without being covered by the walls the edges of the receiving window 26.

In order to correctly characterize the surface 100, when the assembly 1 is in operation, the orientation is such that for any angular position the first redirecting means 8, the fan 6 projected onto the surface 100 is contained within the scanning area 12.

As can also be seen in these drawings, the first redirecting means 8 and the light receiver 10 are separated by a predetermined, known and constant linear distance. This linear distance defines a baseline 28 between both elements of the assembly 1. As can be seen in the drawings, once the fan 6 is redirected it forms a first angle α with respect to said baseline 28, and once the fan 6 is reflected by said surface 10 it forms a second angle β with respect to said baseline 28.

The assembly 1 according to the invention also has control means 14 which are functionally associated with the light emitter and the light receiver 2, 10 as well as with the redirecting elements 8 through cables for synchronizing the emission of the laser beam by the light emitter 2 with the angular position of the redirecting means 8, with the capture of the scanning area 12 by the light receiver 10. In other words, the light receiver 10 captures an image for each position of the fan 6.

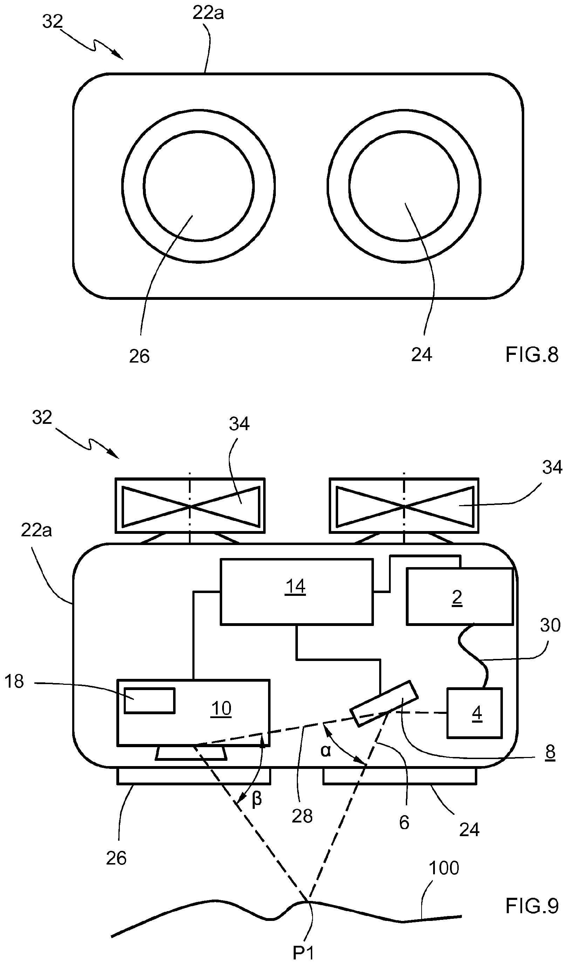

It should be mentioned that all the elements of the assembly 1 according to the invention can optionally be arranged in a single housing 22a with individual emitting and receiving windows (see Figures 8 and 9) or with a single window for the two functions. On the other hand, it is also preferred for the housing 22a to be watertight. This allows using the scanning assembly 1 under water. This solution can be applied, for example, to a remotely operated underwater vehicle, better known in the art as ROV, for *Remotely Operated Vehicle,* or an *Autonomous Underwater Vehicle,* known as AUV.

In this context, it should also be mentioned that if the assembly 1 is used in an underwater environment the laser that is used is preferably a green or blue. As explained above, a blue laser is preferred in the case of clear or slightly cloudy water, whereas a green laser is preferred when the water is cloudy.

As a first element for increasing the scanning speed, or alternatively the definition of the surface, the invention provides that the first redirecting means 8 are assembled so as to be rotational about the fixed shaft 16 with respect to the emitter and the light receiver 2, 10. In this case, the rotation with respect to the emitter and the light receiver 2, 10 is carried out with respect to the vertical shaft, which would protrude from the plane of Figures 1 and 2, and the rotation is indicated in the drawings with the doubleheaded arrow A. The rotation of the first redirecting means 8 is controlled by the control means 14. The fan 6 is thereby displaced by rotating the first redirecting means within the scanning area 12 along a plurality of different instantaneous positions P1, P2. This rotation to move the fan is synchronized with the emission of the fan 6 by the light emitter 2 and the capture of the scanning area by the light receiver 10, with the subsequent determination of the illuminated points.

As a second element for increasing the scanning speed, or alternatively the definition of the surface, in the assembly of Figures 1 and 2 it is first provided that the light receiver 10 comprises its own first processing means 18, i.e., integrated in the light receiver 10 itself. These processing means 18 allow at least distinguishing which points of said scanning area 12 are illuminated by said fan laser 6. In other words, in the entire image captured by the light receiver 10, the first processing means 18 are capable of discriminating which points or pixels of the image correspond to the reflection of the laser light and which points or pixels do not.

When the fan 6 is projected onto instantaneous position P1, if the medium is constant, for example when the projection occurs only in the air, this projection is a straight line. If there is a change of medium, for example air-emitting window 24-water, then the fan 6 forms a curve with a curvature that increases as the angle of incidence of the fan 6 on the emitting window 24 increases. The light receiver 10 detects the reflection of this line of points in the scanning area 12. By using the triangulation between the light which has illuminated the points of the scanning area 12 identified by the processing means 18 and the fan 6 and by knowing the relative position of the shaft 16 with the light capturing element 10 (baseline 28), the assembly 1 can determine and characterize the surface 100 in this position P1 by defining a plurality of reference points. This process of triangulation can take place either in the central unit 14, or preferably in the processing means 18 themselves.

After this point, the operations described in the preceding paragraphs are repeated for as many instantaneous positions as desired. This method is repeated successively and ends up obtaining a point cloud that geometrically characterizes the surface 100. The redirecting means 8 will preferably carry out an angular movement that is always in the same direction during the acquisition of said point cloud. The larger the number of instantaneous positions captured by the light receiver 10, determining the shape of the projection of the fan onto the surface 100, the greater the definition of the geometric characterization thereof will be.

As a result of the processing of the points for each angular position of the redirecting means 8 being done by the first processing means 18, the volume of data that is to be managed afterwards for obtaining the point cloud is much smaller. This allows achieving a higher speed or increasing the level of definition of the characterized surface 100.

On the other hand, it should be mentioned that in a particularly preferred manner, the generation of the point cloud according to the invention can also be obtained using the first processing means 18. Nevertheless, in any of the embodiments of the invention this can alternatively be done in the centralized control means 14.

Another embodiment of the laser scanning assembly according to the invention which has many of the features described in the preceding paragraphs is shown below. Accordingly, hereinafter only those elements that are different will be described, whereas for the common elements reference is made to the description of the first embodiment.

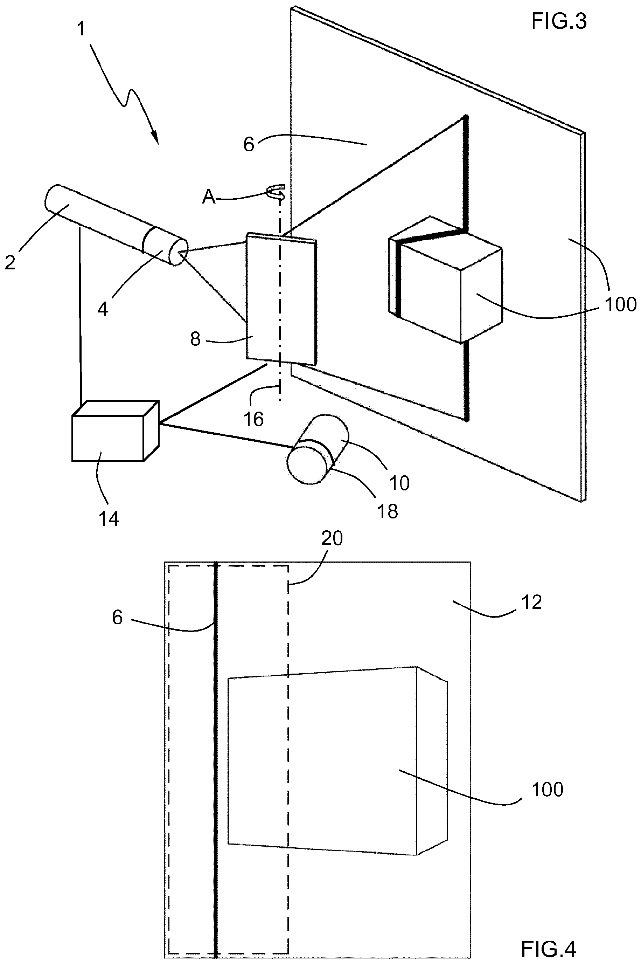

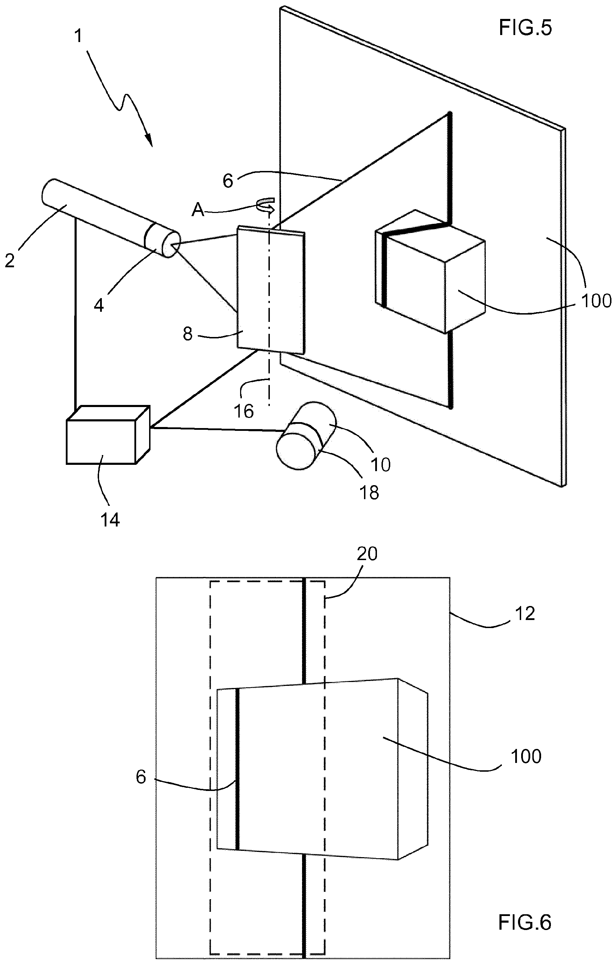

The scanning assembly 1 of Figures 3 to 6 is essentially identical to that of Figures 1 and 2, i.e., it likewise comprises a laser light emitter 2, first diffraction means 4 for transforming the laser light beam into a planar fan configuration 6, first redirecting means 8 assembled so as to be rotational about a fixed shaft, a light receiver 10 with its own processing means 18, and control means 14 in charge of controlling the light emitter and the light receiver 2, 10. In this case, however, the assembly 1 is not encapsulated.

Furthermore, the arrangement of all the elements and their joint operation is substantially the same, and they allow putting the same laser scanning method 1 into practice for obtaining a characterization of the shape of a surface 100. On the other hand, the most significant difference consists of the light receiver 10 comprising a region of interest 20 corresponding to only a part of the scanning area 12. In other words, the light receiver 10 itself is capable of reducing the area explored by the laser within the scanning area 12 to also reduce the area that must be processed in order to determine the position of the points illuminated by the laser fan 6. To that end, the region of interest 20 is mobile in the scanning area 12, controlled by the control means 14 depending on the position of the redirecting means 18. To that end, the control means 14 take into consideration the instantaneous angular position of the first redirecting means 8 in order to later displace the region of interest 20 in the scanning area 12 such that the curve the fan 6 forms on the surface 100 that must be characterized is contained within the region of interest 20 in each image captured by the light receiver 14.

The region of interest 20 is smaller than the scanning area 12 that the light receiver 10 may potentially scan in each captured image. Particularly, in a particularly preferred manner the scanning area 12 is a parallelogram having right angles with a predetermined base and height, and the region of interest 20 can be a parallelogram having right angles which is displaced within the scanning area 12, controlled by the control means 14, as can be seen in the drawings. This drastically reduces the number of pixels that the first processing means 18 must analyze and process in order to determine which of them are really points illuminated by the reflection of the laser fan 6 on the surface 100 to be characterized. In this case, the region of interest 20 should be displaced in both a first main direction of the scanning area and in the perpendicular direction.

Nevertheless, in the embodiment of Figures 3 to 6, the region of interest 20 in this case is a parallelogram having right angles that occupies the entire height of the scanning area 12 and only a part of its width. This greatly simplifies the control of the position of the region of interest 20 with respect to the theoretical scanning area. In this embodiment, the region of interest 20 must only be displaced in the horizontal direction along the scanning area. Alternatively, the parallelogram of the region of interest could occupy the entire width of the scanning area 12 and only a part of the height, and it would accordingly be displaced along the height of the scanning area 12.

All of this provides a higher speed for the acquisition of points characteristic of the surface to be characterized which allows obtaining point clouds more quickly, or else it provides greater definition of these point clouds.

As explained, the scanning assembly 1 according to the invention has a number of applications, particularly when it is assembled in a vehicle and more particularly in an underwater vehicle that can be remotely operated (ROV) or that can be autonomous (AUV), among others. As a result of vehicles of this type, underwater mapping can be carried out, or maintenance operations in underwater structures or other operations can be performed.

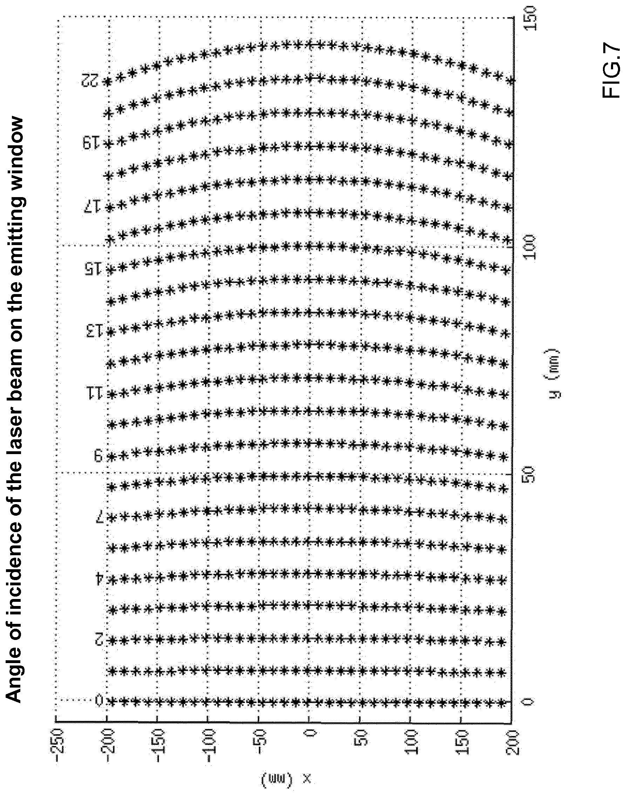

In applications of this type, the laser beam has to go through three different media: the air within the housing of the vehicle, the glass of the emitting window, and finally water. Depending on the angle of incidence, the change of medium means that when the fan 6, which is theoretically planar, is projected onto the surface 100 to be characterized, it becomes deformed like a curve. This effect is depicted in Figure 7. As can be seen, as the angle of incidence of the fan 6 on the emitting window increases, the fan curvature on the surface to be characterized increases.

Under normal conditions, triangulation is performed between a beam that has illuminated the corresponding pixel of the camera that is the reflection of the fan 6 on the surface 100 with the fan characterized by a plane. However, under conditions in which there is a change of medium, such as when the scanning assembly works in an underwater environment, for example, the fan 6 is best characterized by an elliptical cone rather than by a plane. Therefore, triangulation in this case is performed by calculating the intersection of the light beam that has illuminated the pixel of the light receiver 10 with said light beam.

Figures 8 and 9 show a vehicle 32 according to the invention in which a scanning assembly 1 similar to those described up to this point is assembled.

The vehicle 32 is preferably an underwater vehicle, and more particularly a remotely operated or autonomous underwater vehicle driven by propeller-type propulsion means 34.

The vehicle 32 has a single first casing 22a containing the mentioned scanning assembly 1 therein. Vehicles of this type are suitable, for example, for mapping the seafloor.

It can be seen in Figure 9 as a particularity that the light emitter 2 in the vehicle is separated from the diffraction means 4. Nevertheless, both elements are connected through light guiding means 30, such as an optical fiber cable, for example.

Otherwise, the vehicle has a scanning assembly 1 with features similar to those of the embodiment of Figure 1. Accordingly, reference is made to the preceding paragraphs as regards these features and the scanning method.

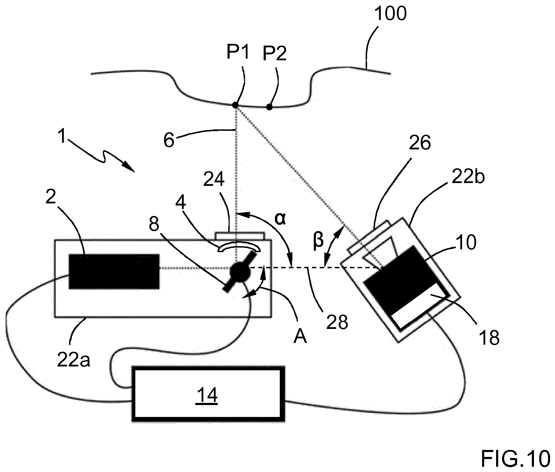

Finally, Figure 10 shows a schematic top plan view of a third embodiment of the scanning assembly 1 according to the invention. This scanning assembly 1 is virtually identical to the embodiment of Figures 1 and 2. Accordingly, reference is made to the description of the embodiment of Figures 1 and 2 for the features not described below. Nevertheless, in this case the diffraction means 4 are arranged downstream of the redirecting means 8. The redirecting means thereby redirect a laser spot beam which later adopts the shape of a fan 6 after going through the diffraction means 4.

The diffraction means 4 can also be a cylindrical lens or a Powell lens, but it is configured as a ring segment.

In a particularly preferred embodiment not shown in the drawings, the diffraction means 4 are formed directly on the emitting window 24 itself.

The embodiments described up until now represent non-limiting examples, such that one skilled in the art will understand that, beyond the examples that have been shown, multiple combinations of the claimed features are possible within the scope of the invention.

## Claims

1. A laser scanning method (1) for obtaining a geometric characterization of the shape of a surface (100) in an underwater environment, based on the principle of triangulation comprising the steps of:
[a] emitting a laser light beam through a laser light emitter (2),
[b] transforming said laser light beam into a planar fan configuration (6) through first diffraction means (4) arranged downstream of said laser light emitter (2),
[c] receiving said laser light beam transformed into said planar fan (6) and redirecting it to project it onto said surface (100) that must be characterized through first light redirecting means (8) arranged downstream of said laser light emitter (2),
[d] capturing a scanning area (12) of said surface (100) that must be characterized through a light receiver (10) arranged with respect to said light emitter (2), such that said scanning area (12) contains said fan (6) projected onto said surface (100), and
[e] synchronizing the emission of said fan by said light emitter (2) and the capture by said light receiver (10) through control means (14) functionally associated with said light emitter and said light receiver (2, 10),
[f] said first redirecting means (8) and said light receiver (10) being separated by a known predetermined distance defining a baseline (28) between both, and said fan (6) forming,
[i] once it is redirected, a first angle (α) with respect to said baseline (28), and
[ii] once it is reflected by said surface (100), a second angle (β) with respect to said baseline (28), and
[g] obtaining, through the first processing means (18) of said light receiver (10), a plurality of points illuminated in the scanning area (12) by the reflection of the fan (6),
**characterized in that** it comprises the additional steps of
[h] characterizing said plurality of points illuminated in the scanning area (12) by an elliptical cone, such that triangulation is performed by calculating the intersection of the light beam that has illuminated said light receiver (10) with the elliptical cone characterizing said plurality of points illuminated in the scanning area (12),
and
[i] rotating said first redirecting means (8) about at least one fixed shaft (16) with respect to said light emitter and said light receiver (2, 10), the rotation of said first redirecting means (8) being controlled by said control means (14), for displacing said fan (6) within said scanning area (12) along a plurality of different instantaneous positions (P1, P2) in a manner that is synchronized with the operation of said light emitter (2) and said light receiver (10), and
[j] repeating said steps [a] to [i] for a plurality of angular positions of said redirecting means for obtaining a three-dimensional point cloud that geometrically characterizes said surface (100).

2. The laser scanning method (1) according to claim 1, **characterized in that** said first diffraction means (4) are arranged between said laser light emitter (2) and said first light redirecting means (8) such that said laser light beam is first transformed into a planar fan configuration (6), and it is then redirected by said redirecting means (8) to project said fan (6) onto said surface (100) that must be characterized.

3. The laser scanning method (1) according to claim 1 or 2, **characterized in that** it comprises the step of applying a region of interest (20) on a part of said scanning area (12), said region of interest (20) being mobile in said scanning area (12) controlled said control means (14), depending on the angular position of said first redirecting means (8), such that said region of interest (20) is displaced in said scanning area (12) to contain the instantaneous position of said fan (6) in said scanning area (12).

4. A laser scanning assembly (1) for obtaining a geometric characterization of the shape of a surface (100) in an underwater environment, based on the principle of triangulation comprising:
[a] a laser light emitter (2) for emitting a laser light beam,
[b] first diffraction means (4) for transforming said laser light beam into a planar fan configuration (6) arranged downstream of said laser light emitter (2),
[c] first light redirecting means (8) arranged downstream of said laser light emitter (2) for receiving and redirecting said laser light beam and projecting it onto said surface (100) that must be characterized,
[d] a light receiver (10) arranged with respect to said surface (100) and with respect to said first redirecting means (8) such that said light receiver (10) captures a scanning area (12) corresponding to an area of said surface (100) that must be characterized including said fan (6) projected onto said surface (100), and
[e] control means (14) functionally associated with said light emitter and said light receiver (2, 10) for synchronizing the joint operation of said light emitter (2) and said light receiver (10), and
[f] said first redirecting means (8) and said light receiver (10) being separated by a known predetermined distance defining a constant baseline (28) between both, and said fan (6) forming,
[i] once it is redirected, a first angle (α) with respect to said baseline (28), and
[ii] once it is reflected by said surface (100), a second angle (β) with respect to said baseline (28),
[g] said light receiver (10) comprises its own first processing means (18), configured for obtaining from said captured scanning area (12), a plurality of points illuminated by the reflection of said fan (6) on said surface (100), and in that
[h] said first redirecting means (8) are assembled so as to be rotational about at least one fixed shaft (16) with respect to said light emitter and said light receiver (2, 10), the rotation of said first redirecting means (8) being controlled by said control means (14), for displacing said fan (6) within said scanning area (12) along a plurality of different instantaneous positions (P1, P2), in a manner that is synchronized with the operation of said light emitter (2) and said light receiver (10);
**characterized in that**
[i] the control means (14) or the first processing means (18) are configured to characterize said plurality of points illuminated in the scanning area (12) by an elliptical cone, such that triangulation is performed by calculating the intersection of the light beam that has illuminated said light receiver (10) with the elliptical cone characterizing said plurality of points illuminated in the scanning area (12), **in that**
[j] said light emitter (2), said redirecting means, and said light receiver (10) are encapsulated in at least one housing (22a, 22b), and **in that** said at least one housing comprises an emitting window (24) and a receiving window (26), said redirecting means being opposite said emitting window to project said planar fan (6) onto said surface (100), whereas said light receiver (10) is opposite said receiving window to capture said scanning area (12) **in that**
[k] said housing (22a, 22b) is watertight and **in that**
[l] said laser is green or blue.

5. An underwater vehicle, **characterized in that** it comprises a scanner assembly according to claim 4.

6. The underwater vehicle according to claim 5, **characterized in that** said underwater vehicle is a remotely operated or autonomous underwater vehicle.

## Patentansprüche

1. Laserabtastverfahren (1) zum Erstellen einer geometrischen Charakterisierung der Form einer Oberfläche (100) in einer Unterwasserumgebung auf Grundlage des Triangulationsprinzips, das die Schritte aufweist:
[a] Emittieren eines Laserlichtstrahls durch einen Laserlichtemitter (2),
[b] Umwandeln des Laserlichtstrahls in eine planare Fächerkonfiguration (6) durch erste Diffraktionseinrichtungen (4), die dem Laserlichtemitter (2) nachgelagert angeordnet sind,
[c] Empfangen des in den planaren Fächer (6) umgewandelten Laserlichtstrahls und Umlenken desselben, um ihn auf die Oberfläche (100) zu projizieren, die charakterisiert werden muss, durch erste Lichtumlenkeinrichtungen (8), die dem Laserlichtemitter (2) nachgelagert angeordnet sind,
[d] Erfassen eines Abtastgebiets (12) der Oberfläche (100), die charakterisiert werden muss, durch einen Lichtempfänger (10), der in Bezug auf den Lichtemitter (2) angeordnet ist, so, dass das Abtastgebiet (12) den auf die Oberfläche (100) projizierten Fächer (6) enthält, und
[e] Synchronisieren der Emission des Fächers durch den Lichtemitter (2) und der Erfassung durch den Lichtempfänger (10) durch Steuereinrichtungen (14), die dem Lichtemitter und dem Lichtempfänger (2, 10) funktional zugeordnet sind,
[f] wobei die ersten Umlenkeinrichtungen (8) und der Lichtempfänger (10) getrennt sind durch eine bekannte vorgegebene Entfernung, die eine Grundlinie (28) zwischen beiden definiert, und der Fächer (6),
[i] nachdem er umgelenkt worden ist, einen ersten Winkel (α) in Bezug auf die Grundlinie (28) bildet, und
[ii] nachdem er durch die Oberfläche (100) reflektiert worden ist, einen zweiten Winkel (β) in Bezug auf die Grundlinie (28) bildet, und
[g] Erstellen einer Mehrzahl von durch die Reflektion des Fächers (6) in dem Abtastgebiet (12) beleuchteten Punkten durch die ersten Verarbeitungseinrichtungen (18) des Lichtempfängers (10),
**dadurch gekennzeichnet, dass** es die zusätzlichen Schritte aufweist
[h] Charakterisieren der Mehrzahl von in dem Abtastgebiet (12) beleuchteten Punkten durch einen elliptischen Kegel, so dass eine Triangulation durchgeführt wird, durch Berechnen der Überschneidung des Lichtstrahls, der den Lichtempfänger (10) beleuchtet hat, mit dem elliptischen Kegel, der die Mehrzahl von in dem Abtastgebiet (12) beleuchteten Punkten charakterisiert,
und
[i] Drehen der ersten Umlenkeinrichtungen (8) um mindestens eine feste Achse (16) in Bezug auf den Lichtemitter und den Lichtempfänger (2, 10), wobei die Drehung der ersten Umlenkeinrichtungen (8) durch die Steuereinrichtungen (14) gesteuert wird, um den Fächer (6) innerhalb des Abtastgebiets (12) entlang einer Mehrzahl von verschiedenen momentanen Positionen (P1, P2) in einer Weise zu verlagern, die mit dem Betrieb des Lichtemitters (2) und des Lichtempfängers (10) synchronisiert ist, und
[j] Wiederholen der Schritte [a] bis [i] für eine Mehrzahl von Winkelpositionen der Umlenkeinrichtungen zum Erstellen einer dreidimensionalen Punktwolke, die die Oberfläche (100) geometrisch charakterisiert.

2. Laserabtastverfahren (1) nach Anspruch 1, **dadurch gekennzeichnet, dass** die ersten Diffraktionseinrichtungen (4) zwischen dem Laserlichtemitter (2) und den ersten Lichtumlenkeinrichtungen (8) angeordnet sind, so dass der Laserlichtstrahl zuerst in eine planare Fächerkonfiguration (6) umgewandelt wird und er anschließend durch die Umlenkeinrichtungen (8) umgelenkt wird, um den Fächer (6) auf die Oberfläche (100) zu projizieren, die charakterisiert werden muss.

3. Laserabtastverfahren (1) nach Anspruch 1 oder 2, **dadurch gekennzeichnet, dass** es den Schritt des Anwendens eines Bereichs von Interesse (20) auf einen Teil des Abtastgebiets (12) aufweist, wobei der Bereich von Interesse (20) in dem Abtastgebiet (12) durch die Steuereinrichtungen (14) abhängig von der Winkelposition der ersten Umlenkeinrichtungen (8) gesteuert mobil ist, so dass der Bereich von Interesse (20) so in dem Abtastgebiet (12) verlagert wird, dass er die momentane Position des Fächers (6) in dem Abtastgebiet (12) enthält.

4. Laserabtastanordnung (1) zum Erstellen einer geometrischen Charakterisierung der Form einer Oberfläche (100) in einer Unterwasserumgebung auf Grundlage des Triangulationsprinzips, die aufweist:
[a] einen Laserlichtemitter (2) zum Emittieren eines Laserlichtstrahls,
[b] erste Diffraktionseinrichtungen (4) zum Umwandeln des Laserlichtstrahls in eine planare Fächerkonfiguration (6), die dem Laserlichtemitter (2) nachgelagert angeordnet sind,
[c] erste Lichtumlenkeinrichtungen (8), die dem Laserlichtemitter (2) nachgelagert angeordnet sind, zum Empfangen und Umlenken des Laserlichtstrahls und Projizieren desselben auf die Oberfläche (100), die charakterisiert werden muss,
[d] einen Lichtempfänger (10), der in Bezug auf die Oberfläche (100) und in Bezug auf die ersten Umlenkeinrichtungen (8) so angeordnet ist, dass der Lichtempfänger (10) ein Abtastgebiet (12) erfasst, das einem Gebiet der Oberfläche (100) entspricht, die charakterisiert werden muss, das den auf die Oberfläche (100) projizierten Fächer (6) enthält, und
[e] Steuereinrichtungen (14), die dem Lichtemitter und dem Lichtempfänger (2, 10) funktional zugeordnet sind, zum Synchronisieren des gemeinsamen Betriebs des Lichtemitters (2) und des Lichtempfängers (10), und
[f] wobei die ersten Umlenkeinrichtungen (8) und der Lichtempfänger (10) durch eine bekannte vorgegebene Entfernung getrennt sind, die eine konstante Grundlinie (28) zwischen beiden definiert, und der Fächer (6)
[i] nachdem er umgelenkt worden ist, einen ersten Winkel (α) in Bezug auf die Grundlinie (28) bildet, und
[ii] nachdem er durch die Oberfläche (100) reflektiert worden ist, einen zweiten Winkel (β) in Bezug auf die Grundlinie (28) bildet,
[g] wobei der Lichtempfänger (10) seine eigenen ersten Verarbeitungseinrichtungen (18) aufweist, die dazu ausgebildet sind, aus dem erfassten Abtastgebiet (12) eine Mehrzahl von durch die Reflektion des Fächers (6) auf der Oberfläche (100) beleuchteten Punkten zu erstellen, und wobei
[h] die ersten Umlenkeinrichtungen (8) so montiert sind, dass sie sich um mindestens eine feste Achse (16) in Bezug auf den Lichtemitter und den Lichtempfänger (2, 10) drehen, wobei die Drehung der ersten Umlenkeinrichtungen (8) durch die Steuereinrichtungen (14) gesteuert wird, um den Fächer (6) innerhalb des Abtastgebiets (12) entlang einer Mehrzahl von verschiedenen momentanen Positionen (P1, P2) in einer Weise zu verlagern, die mit dem Betrieb des Lichtemitters (2) und des Lichtempfängers (10) synchronisiert ist;
**dadurch gekennzeichnet, dass**
[i] die Steuereinrichtungen (14) oder die ersten Verarbeitungseinrichtungen (18) dazu ausgebildet sind, die Mehrzahl von in dem Abtastgebiet (12) beleuchteten Punkten durch einen elliptischen Kegel zu charakterisieren, so dass eine Triangulation durchgeführt wird, durch Berechnen der Überschneidung des Lichtstrahls, der den Lichtempfänger (10) beleuchtet hat, mit dem elliptischen Kegel, der die Mehrzahl von in dem Abtastgebiet (12) beleuchteten Punkten charakterisiert, wobei
[j] der Lichtemitter (2), die Umlenkeinrichtungen und der Lichtempfänger (10) in mindestens einem Gehäuse (22a, 22b) gekapselt sind und wobei das mindestens eine Gehäuse ein Emissionsfenster (24) und ein Empfangsfenster (26) aufweist, wobei sich die Umlenkeinrichtungen dem Emissionsfenster gegenüber befinden, um den planaren Fächer (6) auf die Oberfläche (100) zu projizieren, wohingegen sich der Lichtempfänger (10) dem Empfangsfenster gegenüber befindet, um das Abtastgebiet (12) zu erfassen, wobei
[k] das Gehäuse (22a, 22b) wasserdicht ist und wobei
[l] der Laser grün oder blau ist.

5. Unterwasserfahrzeug, **dadurch gekennzeichnet, dass** es eine Abtastanordnung nach Anspruch 4 aufweist.

6. Unterwasserfahrzeug nach Anspruch 5, **dadurch gekennzeichnet, dass** das Unterwasserfahrzeug fernbedient wird oder ein autonomes Unterwasserfahrzeug ist.

## Revendications

1. Procédé de balayage laser (1) pour obtenir une caractérisation géométrique de la forme d'une surface (100) dans un environnement sous-marin, sur la base du principe de la triangulation, comprenant les étapes suivantes :
[a] l'émission d'un faisceau de lumière laser par un émetteur de lumière laser (2),
[b] la transformation dudit faisceau de lumière laser en une configuration en éventail (6) plan par des premiers moyens de diffraction (4) agencés en aval dudit émetteur de lumière laser (2),
[c] la réception dudit faisceau de lumière laser transformé en ledit éventail (6) plan et sa redirection pour le projeter sur ladite surface (100) qui doit être **caractérisée par** des premiers moyens de redirection (8) de lumière agencés en aval dudit émetteur de lumière laser (2),
[d] la capture d'une zone de balayage (12) de ladite surface (100) qui doit être **caractérisée par** un récepteur de lumière (10) agencé par rapport audit émetteur de lumière (2), de sorte que ladite zone de balayage (12) contient ledit éventail (6) projeté sur ladite surface (100), et
[e] la synchronisation de l'émission dudit éventail par ledit émetteur de lumière (2) et de la capture par ledit récepteur de lumière (10) par des moyens de commande (14) associés de manière fonctionnelle audit émetteur de lumière et audit récepteur de lumière (2, 10),
[f] lesdits premiers moyens de redirection (8) et ledit récepteur de lumière (10) étant séparés par une distance prédéterminée connue définissant une ligne de base (28) entre les deux, et ledit éventail (6) formant,
[i] une fois redirigé, un premier angle (α) par rapport à ladite ligne de base (28), et
[ii] une fois réfléchi par ladite surface (100), un second angle (β) par rapport à ladite ligne de base (28), et
[g] l'obtention, par les premiers moyens de traitement (18) dudit récepteur de lumière (10), d'une pluralité de points éclairés dans la zone de balayage (12) par la réflexion de l'éventail (6),
**caractérisé en ce qu'**il comprend les étapes supplémentaires suivantes
[h] la caractérisation de ladite pluralité de points éclairés dans la zone de balayage (12) par un cône elliptique, de sorte qu'une triangulation est effectuée par le calcul de l'intersection du faisceau de lumière qui a éclairé ledit récepteur de lumière (10) avec le cône elliptique caractérisant ladite pluralité de points éclairés dans la zone de balayage (12),
et
[i] la rotation desdits premiers moyens de redirection (8) autour d'au moins un arbre fixe (16) par rapport audit émetteur de lumière et audit récepteur de lumière (2, 10), la rotation desdits premiers moyens de redirection (8) étant commandée par lesdits moyens de commande (14), pour déplacer ledit éventail (6) à l'intérieur de ladite zone de balayage (12) le long d'une pluralité de positions instantanées (P1, P2) différentes d'une manière qui est synchronisée avec le fonctionnement dudit émetteur de lumière (2) et dudit récepteur de lumière (10), et
[j] la répétition desdites étapes [a] à [i] pour une pluralité de positions angulaires desdits moyens de redirection pour obtenir un nuage de points tridimensionnel qui caractérise géométriquement ladite surface (100).

2. Procédé de balayage laser (1) selon la revendication 1, **caractérisé en ce que** lesdits premiers moyens de diffraction (4) sont agencés entre ledit émetteur de lumière (2) laser et lesdits premiers moyens de redirection (8) de lumière de sorte que ledit faisceau de lumière laser est d'abord transformé en une configuration en éventail (6) plan, et il est ensuite redirigé par lesdits moyens de redirection (8) pour projeter ledit éventail (6) sur ladite surface (100) qui doit être caractérisée.

3. Procédé de balayage laser (1) selon la revendication 1 ou 2, **caractérisé en ce qu'**il comprend l'étape d'application d'une région d'intérêt (20) sur une partie de ladite zone de balayage (12), ladite région d'intérêt (20) étant mobile dans ladite zone de balayage (12) commandée par lesdits moyens de commande (14), en fonction de la position angulaire desdits premiers moyens de redirection (8), de sorte que ladite région d'intérêt (20) est déplacée dans ladite zone de balayage (12) pour contenir la position instantanée dudit éventail (6) dans ladite zone de balayage (12).

4. Ensemble de balayage laser (1) pour obtenir une caractérisation géométrique de la forme d'une surface (100) dans un environnement sous-marin, sur la base du principe de la triangulation comprenant :
[a] un émetteur de lumière (2) laser pour émettre un faisceau de lumière laser,
[b] des premiers moyens de diffraction (4) pour transformer ledit faisceau de lumière laser en une configuration en éventail (6) plan agencé en aval dudit émetteur de lumière (2) laser,
[c] des premiers moyens de redirection (8) de lumière agencés en aval dudit émetteur de lumière (2) laser pour recevoir et rediriger ledit faisceau de lumière laser et le projeter sur ladite surface (100) qui doit être caractérisée,
[d] un récepteur de lumière (10) agencé par rapport à ladite surface (100) et par rapport auxdits premiers moyens de redirection (8) de sorte que ledit récepteur de lumière (10) capture une zone de balayage (12) correspondant à une zone de ladite surface (100) qui doit être caractérisée incluant ledit éventail (6) projeté sur ladite surface (100), et
[e] des moyens de commande (14) associés de manière fonctionnelle audit émetteur de lumière et audit récepteur de lumière (2, 10) pour synchroniser le fonctionnement conjoint dudit émetteur de lumière (2) et dudit récepteur de lumière (10), et
[f] lesdits premiers moyens de redirection (8) et ledit récepteur de lumière (10) étant séparés par une distance prédéterminée connue définissant une ligne de base (28) constante entre les deux, et ledit éventail (6) formant,
[i] une fois redirigé, un premier angle (α) par rapport à ladite ligne de base (28), et
[ii] une fois réfléchi par ladite surface (100), un second angle (β) par rapport à ladite ligne de base (28),
[g] ledit récepteur de lumière (10) comprend ses propres premiers moyens de traitement (18), configurés pour obtenir à partir de ladite zone de balayage (12) capturée, une pluralité de points éclairés par la réflexion dudit éventail (6) sur ladite surface (100), et en ce que
[h] lesdits premiers moyens de redirection (8) sont assemblés de manière à tourner autour d'au moins un arbre fixe (16) par rapport audit émetteur de lumière et audit récepteur de lumière (2, 10), la rotation desdits premiers moyens de redirection (8) étant commandée par lesdits moyens de commande (14), pour déplacer ledit éventail (6) à l'intérieur de ladite zone de balayage (12) le long d'une pluralité de positions instantanées (P1, P2) différentes, d'une manière qui est synchronisée avec le fonctionnement dudit émetteur de lumière (2) et dudit récepteur de lumière (10) ;
**caractérisé en ce que**
[i] les moyens de commande (14) ou les premiers moyens de traitement (18) sont configurés pour caractériser ladite pluralité de points éclairés dans la zone de balayage (12) :
par un cône elliptique, de sorte qu'une triangulation est effectuée par le calcul de l'intersection du faisceau de lumière qui a éclairé ledit récepteur de lumière (10) avec le cône elliptique caractérisant ladite pluralité de points éclairés dans la zone de balayage (12), **en ce que**
[j] ledit émetteur de lumière (2), lesdits moyens de redirection et ledit récepteur de lumière (10) sont encapsulés dans au moins un boîtier (22a, 22b), et **en ce que** ledit au moins un boîtier comprend une fenêtre d'émission (24) et une fenêtre de réception (26), lesdits moyens de redirection étant à l'opposé de ladite fenêtre d'émission pour projeter ledit éventail (6) plan sur ladite surface (100), tandis que ledit récepteur de lumière (10) est à l'opposé de ladite fenêtre de réception pour capturer ladite zone de balayage (12), **en ce que**
[k] ledit boîtier (22a, 22b) est étanche à l'eau et **en ce que**
[l] ledit laser est vert ou bleu.

5. Véhicule sous-marin, **caractérisé en ce qu'**il comprend un ensemble de balayage selon la revendication 4.

6. Véhicule sous-marin selon la revendication 5, **caractérisé en ce que** ledit véhicule sous-marin est un véhicule sous-marin télécommandé ou autonome.
